# EUROPÄISCHE PATENTANMELDUNG

(11) **EP 1 892 643 A2**
(43) Veröffentlichungstag der Anmeldung: **27.02.2008**
(21) Anmeldenummer: 07012335.1
(22) Anmeldetag: 23.06.2007
(51) Int. Cl.: G06K 7/00

(54) **Lesegerät für eine Speicherkarte, insbesondere ein externer Kartenleser für ISDBT**

(30) Priorität: 24.08.2006 DE 102006039762
(71) Anmelder: Hirschmann Car Communication GmbH, 72654 Neckartenzlingen (DE)
(72) Erfinder: Silva, David, 72622 Nürtigen (DE)
(74) Vertreter: Dietrich, Barbara

(57) **Zusammenfassung**

Die Erfindung betrifft ein Lesegerät (1) für eine Speicherkarte, mit einem Gehäuse (2) in dem eine Leiterplatte (5) mit elektronischen Bauteilen sowie einer Aufnahmevorrichtung für die Speicherkarte zur Realisierung der Funktion des Lesegerätes (1) angeordnet ist, wobei das aus zwei Teilen (8, 9) bestehende Gehäuse (2) zur Durchführung der Speicherkarte einen abdeckbaren Schlitz (3) sowie zumindest eine Öffnung (4) für eine optische Datenübertragung zwischen dem Lesegerät (1) und einem angeschlossenen elektronischen Gerät aufweist, wobei erfindungsgemäß vorgesehen ist, dass auf der Leiterplatte (5) zur optischen Datenübertragung zumindest eine LED (6) derart angeordnet ist, dass die LED (6) in die Öffnung (4) hineinragt und keine separate Abdeckung aufweist sowie in etwa bündig mit der Außenkontur des Gehäuses (2) abschließt.

## Beschreibung

Die Erfindung betrifft ein Lesegerät für eine Speicherkarte, wobei das Lesegerät über eine optische Datenübertragung mit einem elektronischen Gerät verbunden werden kann, gemäß den Merkmalen des Oberbegriffes des Patentanspruches 1.

Externe Lesegeräte, die eine Speicherkarte mit darauf gespeicherten oder zu speichernden Daten aufnimmt, sind bekannt. Solche externen Lesegeräte werden an ein elektronisches Gerät zwecks Datenübertragung zwischen der Speicherkarte und dem elektronischen Gerät entweder kabelgebunden oder drahtlos angeschlossen. Die vorliegende Erfindung beschäftigt sich mit einem Lesegerät, bei der die Datenübertragung zwischen dem Lesegerät und dem elektronischen Gerät kabelgebunden erfolgt.

Bei einem bekannten Lesegerät ist eine Leiterplatte mit elektronischen Bauteilen sowie einer Aufnahmevorrichtung für die Speicherkarte zur Realisierung der Funktion des Lesegerätes in einem Gehäuse angeordnet, wobei das Gehäuse aus zwei einzelnen Teilen aus Druckguss besteht. Ein solches Druckgussgehäuse bietet zwar EMV-Vorteile, ist jedoch schwer und damit auch umständlich in der Montage. Zwecks Funktionsanzeige ist auf der Leiterplatte innerhalb des Gehäuses eine lichtemittierende Diode (im folgenden LED genannt) angeordnet, Damit die LED von außen wahrgenommen werden kann, ist im Gehäuse (genauer in einer Wandung des Gehäuses ein zusätzliches Lichtleiterelement aus Kunststoff angeordnet. Dieses zusätzliche Lichtleiterelement, bei dem es sich um ein durchsichtiges Kunststoffteil handelt, das Licht nach außen leitet, ist ein Zusatzteil und muss ebenfalls aufwändig an dem Gehäuse montiert werden. Dieses zusätzliche Lichtleiterelement bringt jedoch bei der Montage nicht nur einen zusätzlichen Aufwand, sondern es besteht die Gefahr, dass es gar nicht montiert oder fehlerhaft montiert wird, so dass die Leitung des Lichtes nach außen nicht mehr korrekt oder gar nicht möglich ist. Außerdem hat dieses zusätzliche Lichtleiterelement aus Kunststoff den Nachteil, dass der Kunststoff altert und dadurch die Leitung des Lichtes nach außen während der Lebensdauer des Lesegerätes beeinträchtigt wird oder überhaupt nicht mehr funktioniert.

Weiterhin ist es bei dem externen Lesegerät bekannt, dass in dem Gehäuse ein Schlitz vorhanden ist, durch den die Speicherkarte in das Lesegerät eingeführt oder aus diesem entnommen werden kann. Um Verunreinigungen innerhalb des Lesegerätes, insbesondere der Aufnahmevorrichtung für die Speicherkarte, zu vermeiden, ist es schon bekannt geworden, diesen Schlitz mit einem Abdeckelement zu versehen, das beim Zusammenbau des Lesegerätes nur an das Gehäuse gesteckt wird. Dadurch besteht beim Zusammenbau eine Verformungsgefahr für das Abdeckelement, so dass dieses nicht prozesssicher platziert werden kann, gerade wenn der Zusammenbau der einzelnen Elemente des Lesegerätes automatisiert erfolgt.

Der Erfindung liegt daher die Aufgabe zu Grunde, ein Lesegerät für eine Speicherkarte bereit zu stellen, mit dem die eingangs geschilderten Nachteile vermieden werden. Insbesondere soll das Lesegerät prozesssicher und funktionstüchtig herstellbar sein, und die Herstellung und Montage der einzelnen Elemente des Lesegerätes soll bei möglichst verringerter Teilezahl einfach ausgeführt werden können. Eine optische Datenübertragung soll, falls diese realisiert ist und durch eine optische Übertragung mittels LED durchgeführt wird, während der Lebensdauer des Lesegerätes gewährleistet sein

Diese Aufgabe ist durch die Merkmale des Patentsanspruches 1 gelöst.

Erfindungsgemäß ist vorgesehen, dass auf der Leiterplatte zumindest die eine LED derart angeordnet ist, dass die LED in eine Öffnung in dem Gehäuse hineinragt und keine separate Abdeckung aufweist sowie in etwa bündig mit der Außenkontur des Gehäuses abschließt. Damit schlägt die Erfindung in vorteilhafter Weise vor, eine separate Abdeckung in Form eines Lichtleiterelementes entfallen zu lassen, so dass es ermöglicht wird, dass insbesondere eine Stirnfläche der LED direkt von außen sichtbar ist. Dadurch verringert sich die Teilevielfalt, die Elemente des Lesegerätes, insbesondere die LED, lassen sich schneller und einfacher montieren (da die LED zusammen mit der Leiterplatte in das Gehäuse eingesetzt wird) und die optische Funktionsanzeige über die zumindest eine LED ist über die Lebensdauer gewährleistet. Da kein Lichtleiterelement erforderlich ist, lassen sich hierfür die Werkzeug- und Montagekosten einsparen. Außerdem kann das Gehäuse, insbesondere eines der beiden Teile des Gehäuses, einfacher gestaltet werden, da für das entfallene Lichtleiterelement ebenfalls keine Haltemittel erforderlich sind. Ebenso ist ein Kostenvorteil gegeben, da die zumindest eine LED lediglich in die Öffnung in dem einen Teil des Gehäuses eingesetzt werden muss, was in vorteilhafter Weise automatisch mit der Montage der Leiterplatte in dem Gehäuse erfolgt. Mit der LED werden interne Signale des Lesegerätes (zum Beispiel Lesegerät ein- oder ausgeschaltet, funktionstüchtiger [LED zeigt grün] oder fehlerhafter [LED zeigt rot] Betrieb des Lesegerätes) nach außen sichtbar gemacht.

Alternativ oder ergänzend zur Funktionsanzeige mittels der zumindest einen LED ist es zur Datenübertragung zwischen dem Lesegerät und dem elektronischen Gerät weiterhin denkbar, dass auf der Leiterplatte zumindest eine weitere LED eingesetzt wird. Diese auf der Leiterplatte montierte LED (oder mehrere LED's) ist (sind) innerhalb des Gehäuses angeordnet, wobei die Datenübertragung über die zumindest eine LED im Lesegerät und zumindest ein entsprechendes Empfangs- und ggfs. auch Sendemittel (für biderektionale Datenübertragung) im elektronischen Gerät erfolgt. Damit schlägt die Erfindung in vorteilhafter Weise vor, eine separate Abdeckung in Form eines Lichtleiterelementes entfallen zu lassen, so dass es ermöglicht wird, dass insbesondere eine Stirnfläche der LED mit einem entsprechend gestalteten Sende- und/oder Empfangsmittel des elektronischen Gerätes in Kontakt gebracht werden kann. Dadurch ist die optische Datenübertragung zwischen dem Lesegerät, insbesondere über die LED, und dem elektronischen Gerät über die Lebensdauer gewährleistet.

Gleiches gilt für die Abdeckung des Schlitzes, durch den die Speicherkarte in das Lesegerät eingeführt wird. Dieses Abdeckelement, insbesondere aus einem Filzmaterial ausgestanzt, wird an der Innenseite an einem Teil des Gehäuses festgeklebt, wodurch zusätzliche Haltemittel für dieses Abdeckelement entfallen können und die Montage lagerichtig automatisiert erfolgen kann, um Prozesssicherheit zu gewährleisten.

In Bezug auf die Abschirmung von Störstrahlungen von außen in das Lesegerät hinein oder umgekehrt (EMV-Abschirmung) ist es von Vorteil, wenn die beiden Teile des Gehäuses aus Kunststoff bestehen (beispielsweise in einem Kunststoffspritzgussverfahren hergestellt) und an den Innenflächen metallisiert sind (beispielsweise durch Aufdampfung eines elektrischleitfähigen Metalls) oder an den Innenflächen eine metallische Einlage befestigt ist. Damit hat man auch den Gewichteinsparungsvorteil gegenüber einem Gussgehäuse.

Zur Erhöhung der Abschirmwirkung ist dabei darauf zu achten, dass nach dem Zusammenbau der beiden Teile zu dem fertigen Gehäuse die beiden metallisierten Gehäuseteile oder deren metallische Einlabe miteinander kontaktiert werden. Dies ist ohne weiteres möglich, da beide Gehäusehälften in einer Ausgestaltung der Erfindung mittels eines oder mehrerer Filmscharniere verbunden sind.

Weitere Ausgestaltungen des Lesegerätes, aus denen sich entsprechende Vorteile ergeben, sind in den Unteransprüchen angegeben. Diese Ausgestaltungen, auf die die Erfindung jedoch nicht beschränkt ist, werden im Folgenden beschrieben und anhand der Figuren erläutert.

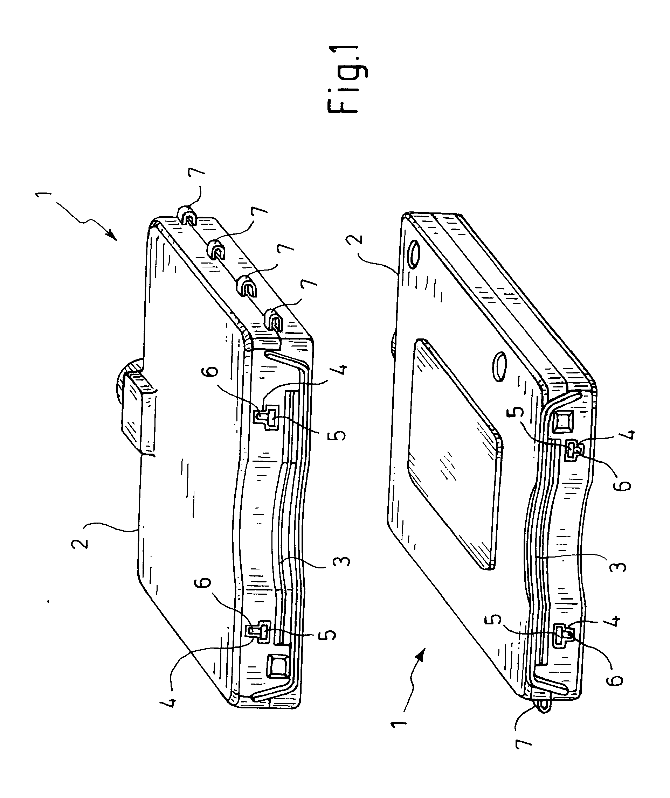

Die Figuren 1 bis 4 zeigen, soweit im Einzelnen dargestellt, mit 1 ein Lesegerät, das ein Gehäuse 2 mit einem Schlitz 3 zur Durchführung einer nicht dargestellten Speicherkarte aufweist. Der Schlitz 3 richtet sich hinsichtlich seiner geometrischen Ausgestaltung nach der Form der Speicherkarte und kann hinsichtlich seiner Breite und/oder Höhe variieren.

Das Gehäuse 2 weist weiterhin eine Öffnung 4 auf, durch die ein Vorsprung einer Leiterplatte 5 sowie die Stirnfläche einer LED 6 herausragt. Die Kante der Leiterplatte 5, die aus der Öffnung 4 herausragt, sowie die Stirnfläche der LED 6 schließen in etwa bündig mit der Seitenfläche des Gehäuses 2 ab.

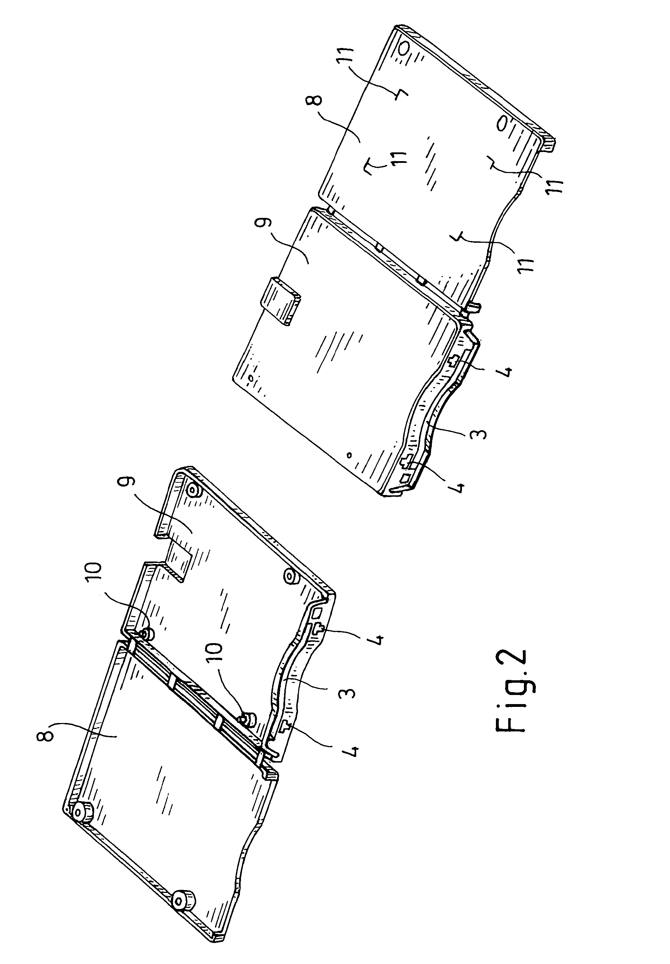

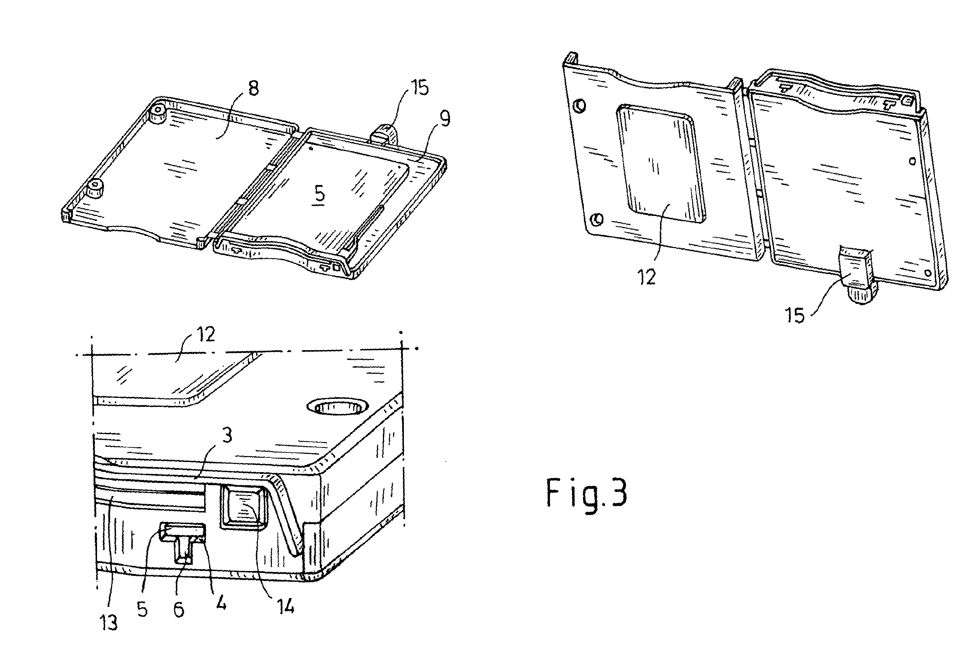

Das aus zwei Teilen bestehende Gehäuse 2 ist bei diesem Ausführungsbeispiel über ein Filmscharnier, insbesondere mehrere Filmscharniere 7, miteinander verbunden. Hierzu wird auf Figur 2 verwiesen, in der die beiden Gehäuseteile 8, 9, einmal mit Blick auf deren Innenseite (linke Darstellung) und deren äußere Oberfläche (rechte Darstellung) dargestellt sind. In dem einen Teil 9 des Gehäuses 2 sind Zentrierstifte 10 angeordnet, die in entsprechende Öffnungen in der Leiterplatte 5 eingreifen, um diese lagerichtig an dem Gehäuseteil 9 festzulegen. Auf der äußeren Oberseite des Gehäuseteiles 8 sind Markierungen 11 für ein Klebepad 12 (s. Figur 3) vorhanden, wobei dieses Klebepad (z.B. ein doppelseitiges Klebeband oder ein Klettband) die Befestigung des Lesegerätes 1 an seinem gewünschten Einbauort ermöglichen. Dadurch wird die Anbringung des Lesegerätes an seinem Anbauort erleichtert, da z.B. eine Verschraubung nicht erforderlich ist. Diese Anbringung mit einem entsprechenden Klebepad 12 ist insbesondere dann von Vorteil, wenn das Lesegerät 1 in einem Fahrzeug, z.B. an dessen Karosserie, befestigt werden soll. Durch ein solches Klebepad 12 ist eine dauerhafte Befestigung des Lesegerätes 1 an der Karosserie gewährleistet, so dass es auch bei Vibrationen, Temperaturschwankungen oder dergleichen nicht zu einem Lösen des Lesegerätes 1 kommen kann. Es sind weitere Möglichkeiten denkbar, das Gehäuse an der Karosserie zu befestigen, so zum Beispiel mittels eines Klettverschlusses. Die Befestigung an der Karosserie kann aber auch durch Schrauben realisierbar sein. Das Gehäuse wird in dem Fall mit einer oder mehrere Befestigungslaschen versehen.

In Figur 3 ist der prinzipielle Aufbau des Lesegerätes 1 gezeigt, wobei in der Darstellung links oben gezeigt ist, dass die Leiterplatte 5 an dem Gehäuseteil 9 festgelegt ist. In der Darstellung rechts oben ist erkennbar, dass das Klebepad 12 angebracht ist und die beiden Gehäuseteile 8, 9 noch nicht zusammengeklappt worden sind.

In der Darstellung links unten ist erkennbar, dass das Gehäuse 2 durch Zusammenklappen der beiden Teile 8, 9, fertig montiert ist, wozu an den beiden Teilen 8, 9 des Gehäuses 2 entsprechende Rastmittel (z.B. eine Ausnehmung, in die ein korrespondierender Rasthaken eingreift), vorhanden sind. Ergänzend oder alternativ zu der Rastverbindung der beiden Teile 8, 9 kann auch eine Schraubverbindung zum Einsatz kommen. Wesentlich für die Erfindung ist in der linken unteren Darstellung der Figur 3, dass das eine Gehäuseteil, insbesondere 9, die Öffnung 4 aufweist, in die der Vorsprung der Leiterplatte 5 sowie die Stirnfläche der LED 6 hineinragt und beide in etwa bündig mit der Außenfläche des Teiles 9 abschließen. Damit ist sichergestellt, dass das Lesegerät 1 mit seinem Gehäuse 2 in eine entsprechende Aufnahmevorrichtung des elektronischen Gerätes (nicht dargestellt) eingesetzt werden kann und über die zumindest eine LED 6 die optische Datenübertragung erfolgen kann. Weiterhin ist in dieser Darstellung gezeigt, dass der Schlitz 3 mit einer Abdeckung 13 versehen ist, um das Eindringen von Schmutzpartikeln, wie Staub oder dergleichen, und das Eindringen von Feuchtigkeit weitestgehend oder vollständig zu vermeiden. 14 ist eine Kartenauswurftaste (bei der Betätigung wird die Karte nach außen befördert) und 15 ist eine Kabelverbindung (mit oder ohne Steckverbinder) zwischen dem Lesegerät 1 und dem elektronischen Gerät zwecks drahtgebundenem Datenaustaus und eventuell auch für eine Stromversorgung des Lesegerätes 1.

Denkbar ist also ein Lesegerät 1 mit nur einer LED 6 zur Funktionsanzeige, mit nur einer LED 6 zur optischen Datenübertragung (ergänzend oder ersetzend die kabelgebundene Datenübertragung), zwei LED's 6 jeweils zur Funktionsanzeige und zur optischen Datenübertragung oder auch mehr als eine LED 6 für die jeweils genannte Funktion.

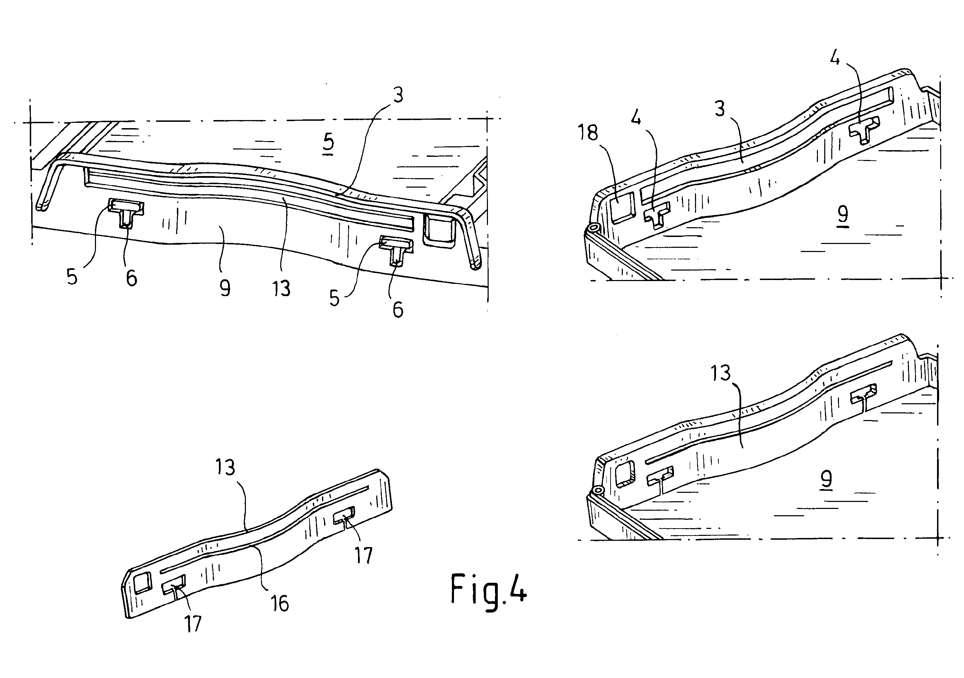

In Figur 4 sind noch einmal Detailansichten und die Montageabfolge gezeigt. Nachdem das Gehäuse 2 mit seinen beiden Teilen 8, 9 hergestellt worden ist (s. Figur 2 sowie rechte obere Darstellung der Figur 4) wird die Abdeckung 13, insbesondere aus einem Filzmaterial bestehend, an der Seitenfläche des Teiles 9 aufgeklebt (siehe rechte unterer Darstellung der Figur 4).

Die Abdeckung 13 weist ihrerseits einen Schlitz 16 zur Durchführung der Speicherkarte sowie zumindest eine Ausnehmung 17, insbesondere mehrere Ausnehmungen 17, auf, durch die der Vorsprung der Leiterplatte 5 sowie die LED 6 durchgeführt werden können (siehe linke untere Darstellung der Figur 4). Der nächste Montageschritt ist das Einsetzen der Leiterplatte 5 in das Gehäuseteil 9, wobei die Leiterplatte 5 lagerichtig mittels der Zentrierstifte 10 an diesem Gehäuseteil 9 festgelegt wird. Dabei ist gleichzeitig sichergestellt, dass auch der Vorsprung der Leiterplatte 5 sowie die LED lagerichtig durch die Ausnehmungen 17 in der Abdeckung 13 sowie der korrespondierenden Öffnungen 4 in dem Gehäuseteil 9 durchgeführt werden. Nachdem dieser Montageschritt insbesondere automatisiert vollzogen worden ist (siehe obere linke Darstellung der Figur 4), wird das Gehäuseteil 8 längs der Filmscharniere 7 umgeklappt und beide Gehäuseteile 8, 9 rastend und/oder verschraubend miteinander verbunden. Dabei ist es von besonderem Vorteil, wenn die Innenflächen der beiden Gehäuseteile 8, 9 sowie die Innenflächen der Filmscharniere 7 metallisiert sind, um die gewünschte EMV-Abschirmung zu erzielen. Alternativ oder ergänzend dazu kann die EMV-Abschirmung aber auch über metallische Einlagen in den beiden Gehäuseteilen 8, 9 erfolgen, wobei durch die Rastverbindung und/oder die Schraubverbindung der elektrische Kontakt zwischen diesen beiden Metalleinlagen hergestellt wird.

In einer Abwandlung der Erfindung ist es denkbar, dass eines der beiden Gehäuseteile 8, 9 oder beide Gehäuseteile 8, 9 nach ihrer Herstellung noch durchgängig im Seitenbereich verschlossen sind und insbesondere der Schlitz 3 sowie die zumindest eine Öffnung 4 nachträglich eingebracht werden, beispielsweise mittels eines Ausstanzvorganges. Dabei ist es auch denkbar, dass vor dem Ausstanzen des Schlitzes 3 und der Öffnung 4 die Abdeckung 13 angebracht wird und deren Schlitz 16 und Ausnehmung 17 ebenfalls während des Stanzvorganges mit eingebracht werden.

Selbstverständlich vorhanden, jedoch zwecks Vereinfachung nicht dargestellt, sind auf der Leiterplatte 5 die elektronischen Bauteile zur Realisierung der Funktion des Lesegerätes 1, insbesondere für die Datenübertragung und Datenverarbeitung der Daten auf der nicht dargestellten Speicherkarte, sowie die Aufnahmevorrichtung innerhalb des Lesegerätes 1 für die Aufnahme und Ausgabe der Speicherkarte, ebenso wie Mittel zum Einsetzen und Entnehmen des externen Lesegerätes 1 in das ebenfalls nicht dargestellte elektronische Gerät.

### Bezugszeichenliste

- 1.: Lesegerät
- 2.: Gehäuse
- 3.: Schlitz
- 4.: Öffnung
- 5.: Leiterplatte
- 6.: LED
- 7.: Filmscharnier
- 8.: Gehäuseteil
- 9.: Gehäuseteil
- 10.: Zentrierstift
- 11.: Markierung
- 12.: Klebepad
- 13.: Abdeckung
- 14.: Kartenauswurftaste
- 15.: Kabelverbindung
- 16.: Schlitz
- 17.: Ausnehmung
- 18.: Ausnehmung

## Patentansprüche

1. Lesegerät (1) für eine Speicherkarte, mit einem Gehäuse (2) in dem eine Leiterplatte (5) mit elektronischen Bauteilen sowie einer Aufnahmevorrichtung für die Speicherkarte zur Realisierung der Funktion des Lesegerätes (1) angeordnet ist, wobei das aus zwei Teilen (8, 9) bestehende Gehäuse (2) zur Durchführung der Speicherkarte einen abdeckbaren Schlitz (3) sowie zumindest eine Öffnung (4) zur Realisierung eines optischen Durchlasses, wobei das Lesegerät (1) mit einem elektronischen Gerät zwecks Datenaustausch verbindbar ist, **dadurch gekennzeichnet, dass** auf der Leiterplatte (5) zumindest eine LED (6) derart angeordnet ist, dass die LED (6) in die Öffnung (4) hineinragt und keine separate Abdeckung aufweist sowie in etwa bündig mit der Außenkontur des Gehäuses (2) abschließt.

2. Lesegerät (1) nach Anspruch 1, **dadurch gekennzeichnet, dass** die Leiterplatte (5) einen Vorsprung aufweist, der zusammen mit der LED (6) in die Öffnung (4) hineinragt.

3. Lesegerät (1) nach Anspruch 1 oder 2, **dadurch gekennzeichnet, dass** die beiden Teile (8, 9) des Gehäuses (2) über zumindest ein Filmscharnier (7) miteinander verbunden sind.

4. Lesegerät (1) nach Anspruch 3, **dadurch gekennzeichnet, dass** die beiden Teile (8, 9) des Gehäuses (2) Rastmittel aufweisen, die die beiden Teile (8, 9) lösbar miteinander verbinden.

5. Lesegerät (1) nach Anspruch 3 oder 4, **dadurch gekennzeichnet, dass** die beiden Teile (8, 9) des Gehäuses (2) nach der Montage der Leiterplatte (5) mittels einer Schraubverbindung lösbar miteinander verbunden sind.

6. Lesegerät (1) nach einem der vorhergehenden Ansprüche, **dadurch gekennzeichnet, dass** zumindest eines der beiden Teile (8, 9) des Gehäuses (2) Zentrierstifte (10) zur Lagepositionierung der Leiterplatte (5) innerhalb des Gehäuses (2) aufweist.

7. Lesegerät (1) nach einem der vorhergehenden Ansprüche, **dadurch gekennzeichnet, dass** zumindest eines der beiden Teile (8, 9) des Gehäuses (2) auf seiner Oberfläche Markierungen (11) für ein Klebepad (12) oder ein Klettverschluß aufweist.

8. Lesegerät (1) nach einem der vorhergehenden Ansprüche, **dadurch gekennzeichnet, dass** hinter dem Schlitz (3) in dem Gehäuse (2) eine Abdeckung (13) mit einem Schlitz (16) zur Durchführung der Speicherkarte an zumindest einem der beiden Teile (8, 9) des Gehäuses (2) aufgeklebt ist.

9. Lesegerät (1) nach Anspruch 8, **dadurch gekennzeichnet, dass** die Abdeckung (13) zumindest eine Ausnehmung (17) aufweist, deren Form mit der LED (6) und dem Vorsprung der Leiterplatte (5) korrespondiert.

10. Lesegerät (1) nach einem der vorhergehenden Ansprüche, **dadurch gekennzeichnet, dass** die beiden Teile (8, 9) des Gehäuses (2) aus Kunststoff bestehen und die Innenflächen der beiden Teile (8, 9) des Gehäuses (2) metallisiert sind oder an den Innenflächen eine metallische Einlage befestigt ist.

11. Lesegerät (1) nach einem der vorhergehenden Ansprüche, **dadurch gekennzeichnet, dass** die zumindest eine LED (6) zur optischen Datenübertragung mit dem elektronischen Gerät und/oder für eine optische Funktions-Anzeige ausgebildet ist.
